# FASCICULE DE BREVET EUROPEEN

(11) **EP 3 488 598 B1**
(45) Date de publication et mention de la délivrance du brevet: **02.09.2020**
(21) Numéro de dépôt: 17748441.7
(22) Date de dépôt: 24.07.2017
(51) Int. Cl.: A45C 15/00, H04M 1/18, H04M 1/21, A45C 11/00, A45D 34/02, B05B 11/00

(54) **RECIPIENT, NOTAMMENT POUR UN DISPOSITIF DE PROTECTION D'UN APPAREIL ELECTRONIQUE, ET PROCEDE DE FABRICATION DUDIT RECIPIENT**
BEHÄLTER, INSBESONDERE FÜR EINE VORRICHTUNG ZUM SCHUTZ EINER ELEKTRONISCHEN VORRICHTUNG, UND VERFAHREN ZUR HERSTELLUNG DES BESAGTEN BEHÄLTERS
CONTAINER, NOTABLY FOR A DEVICE FOR PROTECTING AN ELECTRONIC APPLIANCE, AND METHOD FOR MANUFACTURING SAID CONTAINER

(30) Priorité: 25.07.2016 FR 1657092
(43) Date de publication de la demande: 29.05.2019
(73) Titulaire: Albéa le Tréport, 76470 Le Tréport (FR)
(72) Inventeur: DUMONT, Pierre, Gabriel, Françis, 80570 Dargnies (FR); ELMEGUENNI, Mohamed, 80130 Friville Escarbotin (FR); HUBERDEAU, Emmanuel, 76370 Neuville-Les-Dieppe (FR); PRUVOST, Thomas, 80880 Saint-Quentin-La-Motte (FR)
(74) Mandataire: Gevers & Orès
(86) Numéro de dépôt international: PCT/EP2017/068697
(87) Numéro de publication internationale: WO 2018/019796

(56) Documents cités:
- EP-A1- 2 760 139
- DE-A1- 19 623 643
- FR-A3- 3 026 861
- US-A1- 2003 109 280

## Description

L'invention concerne un récipient, notamment pour un dispositif de protection d'un appareil électronique. L'invention se rapporte également à un dispositif de protection pour appareil électronique comprenant un tel récipient. L'invention se rapporte encore au procédé de fabrication dudit récipient.

Pour protéger les appareils électroniques comme les téléphones portables ou les tablettes tactiles, il existe des protections destinées à les envelopper au moins en partie, et qui ont pour fonction d'éviter les contacts directs avec l'appareil, par exemple en cas de chute. Certaines protections consistent en particulier en des enveloppes en matériau souple, tel du caoutchouc ou du cuir, afin de pouvoir absorber les chocs. D'autres protections sont faites, au contraire, d'un matériau rigide formant une coque, pour agir comme un bouclier.

On a souhaité ajouter des fonctionnalités à ces protections, pour les rendre plus utiles. Ainsi, certaines protections ont par exemple été conçues pour pouvoir transporter des objets du quotidien. En particulier, certaines protections sont configurées pour pouvoir transporter des récipients de produit cosmétique, tels que des flacons de parfum. On connait par exemple la demande de brevet WO 2012/156546, qui montre une protection munie d'une poche de rangement latérale permettant d'y insérer un flacon de parfum.

Un autre document WO 2013/020591 porte sur une coque comportant un flacon amovible de forme sensiblement plane, et agencé sur la face arrière de la coque. La coque est configurée pour recevoir le flacon dans une épaisseur réduite de la coque. Ainsi, le flacon peut être actionné en position de rangement sur la coque ou à distance de la coque lorsqu'il est manipulé. La coque comprend un espace de rangement qui maintien le flacon.

Un autre type de dispositifs simplifie le procédé d'assemblage du récipient à la coque. Ainsi, le document EP 2 905 571 montre un récipient amovible muni de moyens d'accrochage qui permettent de l'assembler directement sur la coque, sans recourir à une poche de maintien du récipient, dans laquelle l'insertion est difficile.

FR3026861 décrit un récipient conformément au préambule de la revendication 1. EP2760139 et US2003109280 montrent des procédures d'injection et de soudure à ultrasons et DE19623643 divulgue un système d'encliquetage.

Cependant, la fabrication d'un tel récipient demande une grande précision, notamment à cause des moyens d'accrochage qui doivent être formés à des dimensions précises, afin que le procédé d'accrochage et de décrochage fonctionne de manière optimale. Ce problème est d'autant plus présent lorsque les moyens d'accrochage sont de petites tailles avec des éléments peu épais.

En effet, on utilise pour cela des matériaux déformables, par exemple de type thermo-polymère, pour fabriquer au moins les moyens d'accrochage, voire généralement le récipient entier. Pour la fabrication des récipients à partir de matériaux de type thermoplastique, on utilise souvent un procédé, dit de soufflage ou d'injection soufflage. Ce procédé consiste à injecter de l'air sous pression dans une préforme chauffée disposée dans un moule, afin de la déformer aux dimensions du moule, cette déformation donnant la forme finale du récipient.

Ainsi, il n'existe pas aujourd'hui de procédé permettant d'obtenir à la fois un récipient et des moyens d'accrochages bien définis. L'invention vise à améliorer la situation en évitant les défauts précités, en fournissant un récipient muni de moyens d'accrochages.

Pour cela, l'invention concerne un récipient, notamment pour un dispositif de protection pour appareil électronique, le récipient étant muni d'un réservoir pour produit, notamment cosmétique, le récipient comprenant deux parties, une première partie d'accrochage munie de moyens d'accrochage du récipient à un objet distinct du récipient, notamment à un élément du dispositif de protection, et une deuxième partie support définissant au moins en partie le volume dudit réservoir, la partie d'accrochage et la partie support étant configurées pour pouvoir être assemblées l'une à l'autre de manière à former ledit réservoir.

Ainsi, grâce à l'invention, on peut former les deux parties séparément, puis les assembler pour fabriquer le récipient. Cela permet notamment de fabriquer la partie d'accrochage avec des procédés de fabrication précis afin d'obtenir des moyens d'accrochage biens définis, qui peuvent notamment être de dimensions réduites. On évite ainsi d'avoir recours à un procédé unique formant le récipient entier, et qui ne permet pas d'obtenir une telle précision pour les moyens d'accrochage.

Selon différents modes de réalisation de l'invention, qui pourront être pris ensemble ou séparément :
- la partie d'accrochage est formée par injection,
- la partie d'accrochage est faite d'un matériau thermoplastique,
- la partie support est formée par injection,
- la partie support est faite d'un matériau thermoplastique,
- la partie d'accrochage et la partie support sont assemblées par soudure à ultrason,
- la partie d'accrochage comprend une paroi,
- la paroi est sensiblement plane,
- la partie support a une forme définissant un espace volumique formant au moins en partie ledit réservoir,
- la partie support comprend une ouverture, de sorte que le volume défini par la partie support est ouvert,
- la paroi de la partie d'accrochage obture l'ouverture de la partie support, lorsque les deux parties sont assemblées,
- la paroi d'accrochage comprend un premier bord,
- les moyens d'accrochage comportent des pattes agencées à un premier bord de la paroi de la partie d'accrochage,
- la paroi d'accrochage comprend un deuxième bord opposé au premier,
- les moyens d'accrochage sont configurés pour que le récipient soit amovible,
- les moyens d'accrochage comportent un système d'encliquetage agencé en partie sur le deuxième bord de la paroi, le deuxième bord étant opposé au premier,
- le système d'encliquetage comprend un cran d'encliquetage agencé sur le deuxième bord de la paroi,
- le cran d'encliquetage est destiné à coopérer avec une fente de réception du cran d'encliquetage agencée sur le dispositif de protection,
- la partie support a une forme de parallélépipède,
- ie parallélépipède est rectangle,
- le parallélépipède a une face manquante de manière à former l'ouverture de la partie support,
- la partie support est munie d'un goulot,
- une pompe est agencée sur le récipient,
- ladite pompe est actionnable par les moyens d'actionnement,
- les moyens d'actionnement comprennent un poussoir pour actionner la pompe,
- le poussoir est agencé sur la pompe,
- les dimensions de la paroi d'accrochage sont plus grandes que les dimensions de la partie support,
- au moins l'une des parties du dispositif, en particulier la partie d'accrochage, est faite d'un matériau dont la composition comprend du Poly-Butadiène-Téréphtalate, de préférence mélangé à du Polyéthylène Téréphtalate.

L'invention se rapporte également à un dispositif de protection d'un appareil électronique, notamment d'un téléphone portable, comprenant un récipient selon l'invention.

L'invention se rapporte encore à un procédé de fabrication d'un récipient muni d'un réservoir, notamment pour produit cosmétique, le procédé comprenant les étapes consécutives consistant à :
- former séparément, une partie d'accrochage munie de moyens d'accrochage, et une partie support définissant au moins en partie le volume dudit réservoir,
- assembler la partie d'accrochage et la partie support, de manière à réaliser le récipient, l'assemblage de la partie d'accrochage et de la partie support formant le réservoir du récipient.

La formation d'au moins la partie d'accrochage est, de préférence, opérée grâce à un moulage par injection. De plus, ledit moulage est fait à partir d'un matériau thermoplastique. En outre, le matériau thermoplastique comprend du Poly-Butadiène-Téréphtalate, de préférence mélangé à du Polyéthylène Téréphtalate.

L'étape d'assemblage entre la partie d'accrochage et la partie support est préférentiellement opérée par soudure à ultrasons.

L'invention sera mieux comprise à la lumière de la description suivante qui n'est donnée qu'à titre indicatif et qui n'a pas pour but de la limiter, accompagnée des dessins joints :
- la figure 1 illustrant de façon schématique, une vue en perspective d'un récipient selon un mode de réalisation de l'invention,
- la figure 2 illustrant de façon schématique, une vue en perspective du récipient de la figure 1, dont les parties sont séparées,
- la figure 3 illustrant de façon schématique, une vue de face du récipient de la figure 1,
- la figure 4 illustrant de façon schématique, une vue en perspective du récipient de la figure 1 selon un autre angle de vue, et dont les parties sont séparées,
- la figure 5 illustrant de façon schématique, une vue en perspective d'un dispositif de protection pour un appareil électrique, le dispositif comprenant un récipient selon l'invention,
- la figure 6 illustrant de façon schématique une vue en perspective du dispositif de protection de la figure 5, dont les parties sont séparées,
- la figure 7 illustrant de façon schématique, une vue en perspective, selon un autre angle de vue, du dispositif de protection de la figure 5, dont les parties sont séparées.

L'invention concerne un récipient 3 muni d'un réservoir 10 pour produit, par exemple pour produit cosmétique ou pharmaceutique, le produit n'étant pas représenté sur les figures. Dans le mode de réalisation représenté sur les figures, il s'agit d'un flacon pour produit cosmétique qui fait partie d'un dispositif de protection 1 pour un appareil électronique, comprenant par exemple une coque de téléphone portable. Le récipient 3 est configuré pour pouvoir être fixé à un élément du dispositif 1, ici de manière amovible. Ainsi, le récipient 3 est fixé au reste du dispositif 1 de protection pour le rangement et son utilisation, et en être séparé, par exemple pour le recharger en produit ou pour changer le récipient du dispositif 1.

Le récipient 3 est pourvu d'un goulot 16 ouvert sur le réservoir 10, et d'une pompe 17 pour aspirer le produit qui se trouve dans le réservoir 10. La pompe 17 est ici une pompe manuelle usuelle agencée dans le réservoir du récipient 3 fixée au goulot 16 de manière étanche. Une telle pompe 17 est par exemple formée d'une chambre à piston mobile, d'un tube plongeur agencé dans le réservoir 10 pour aspirer le produit, et d'un conduit de sortie qui mène le produit hors de la pompe 17. Le conduit de sortie est solidaire du piston, de sorte que le piston est actionné dans la chambre suite au déplacement du conduit de sortie.

La pompe 17 est actionnable grâce à des moyens d'actionnement, qui sont ici dotés d'un poussoir 18 agencé sur le conduit de sortie, et d'un ressort hélicoïdal de rappel du poussoir 18 disposé autour du conduit de sortie. Ainsi, une pression sur le poussoir 18 induit le déplacement du conduit de sortie et l'actionnement du piston dans la chambre pour forcer l'extraction du produit présent dans la chambre. Après son actionnement, le poussoir 18 retrouve sa position initiale grâce au ressort. Le poussoir 18 est de plus doté d'un orifice de sortie 19 en communication avec le conduit de sortie pour permettre le passage du produit hors de la pompe depuis la chambre vers le conduit de sortie, et enfin à travers le poussoir 18.

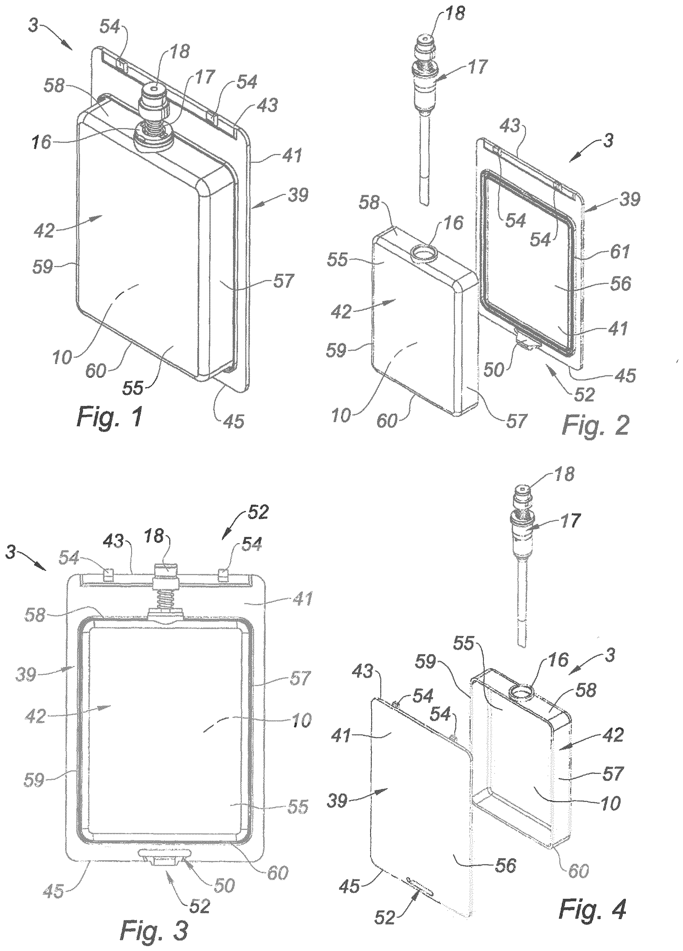

Comme représenté sur les figures 1 à 4, le réservoir 10 du récipient 3 a ici une forme de parallélépipède sensiblement rectangle. Le parallélépipède présente deux grandes faces 55, 56 sensiblement parallèles et quatre faces 57, 58, 59, 60 plus petites perpendiculaires aux grandes faces 55, 56, et qui relient les deux grandes faces pour fermer le réservoir 10. Le goulot 16 du récipient 3 est agencé sur l'une des petites faces.

Selon l'invention, le récipient 3 comprend deux parties, une première partie d'accrochage 39 et une deuxième partie support 42. La partie support 42 définit au moins en partie le volume intérieur dudit réservoir 10, tandis que la partie d'accrochage 39 est munie de moyens d'accrochage 52 du récipient 3 à un objet distinct du récipient 3, ici le dispositif de protection 1.

La partie support 42 est formée de certaines faces du parallélépipède. Elle comprend dans cet exemple toutes les faces du parallélépipède, exceptée l'une des grandes faces 56. Autrement dit, la partie support 42 a une forme de réceptacle ou boitier ouvert à cinq faces, dont une grande face 55 est le fond du réceptacle, avec quatre faces périphériques 57, 58, 59, 60 sensiblement perpendiculaires audit fond. La partie support 42 a donc une ouverture, de sorte que le volume défini par la partie support 42 est ouvert. La partie support 42 a dans ce mode de réalisation une forme définissant un espace volumique correspondant au volume dudit réservoir 10. Autrement dit, le volume ouvert de la partie support 42 définit ici le volume intérieur du réservoir 10. La partie support 42 est en outre munie dudit goulot 16 sur une des faces périphériques 58.

Selon l'invention, la partie d'accrochage 39 et la partie support 42 sont configurées pour pouvoir être assemblées l'une à l'autre de manière à former ledit réservoir 10.

Pour cela, la partie d'accrochage 39 comprend une paroi 41 sensiblement plane capable d'obturer l'ouverture de la partie support 42, lorsque les deux parties 39, 42 sont assemblées. Ainsi, la paroi 41 forme, au moins en partie, une grande face 56 du parallélépipède, qui est manquante sur la partie support 42.

Pour l'assemblage, la paroi 41 comprend une rainure de réception 61 de la partie support 42. La rainure 61 dessine une forme sensiblement rectangulaire sur une face de la paroi 41. La forme de la rainure 61 correspond aux dimensions de la partie support 42. Ainsi, le contour de l'ouverture de la partie support 42 est inséré dans la rainure 61 lors de l'assemblage des deux parties 39, 41. La rainure 61 améliore la résistance de l'assemblage entre les deux parties 39, 41, et facilite également le positionnement des parties entre elles lors de l'assemblage.

En outre, la partie d'accrochage 39 comporte des moyens d'accrochage 52 configurés pour coopérer avec le dispositif de protection 1 pour permettre une fixation amovible du récipient 3 sur le dispositif 1. Les moyens d'accrochage 52 sont agencés de préférence sur la paroi 41. Les dimensions de la paroi 41 de la partie d'accrochage 52 sont plus grandes que les dimensions de la partie support 42. Ainsi, les moyens d'accrochage 52 s'étendent au-delà des dimensions de la partie support pour pouvoir être utilisées facilement.

Les moyens d'accrochage 52 comportent ici deux pattes 54 agencées à un premier bord 43 de la paroi 41. Les pattes 54 s'étendent à l'extérieur du périmètre de la paroi 41 et parallèlement au plan qu'elle définit. Les pattes 54 sont disposées à courte distance des coins du premier bord 43 de la paroi 41. Les pattes 54 ont pour fonction de retenir la paroi 41, lorsque le récipient 3 est fixé au reste du dispositif 1. Les pattes 54 sont glissées sous un rebord du dispositif 1 pour retenir le premier bord 43 de la paroi 41 contre ce rebord.

Les moyens d'accrochage 52 comportent également un cran d'encliquetage 50 agencé au niveau du deuxième bord 45 de la paroi 41. Le cran d'encliquetage 50 fait partie d'un système d'encliquetage, décrit plus loin dans la description, et qui permet de bloquer le récipient sur le dispositif de protection.

Concernant la fabrication du récipient 3, le procédé comprend au moins deux étapes consécutives.

La première étape consiste à former séparément, la partie d'accrochage 39 et la partie support 42. La formation est de préférence opérée avec un moulage par injection, qui est une technologie permettant une grande précision de l'objet moulé. Ladite partie d'accrochage 39 et la partie support 42 sont de préférence faites d'un même matériau thermoplastique, qui est usuelle pour le moulage par injection.

On utilise par exemple une composition de matériau plastique comprenant majoritairement du PBT (pour Poly-Butadiène-Téréphtalate) à au moins 80%, voire 90% de la composition. Le PBT a l'avantage d'avoir une bonne résistance chimique, une tenue aux chocs, un aspect de surface intéressant, une mémoire de forme, et évite en outre les retassures. La composition comprend également un additif, tel que du PET (pour Polyéthylène Téréphtalate), dans des proportions de 5% à 10% de la composition. On peut encore ajouter à la composition un retardateur de flamme, tel qu'un mélange à base de sel métallique d'acide phosphorique organique.

On obtient ainsi des pièces dont l'aspect est amélioré en plus d'une excellente brillance, ainsi qu'une plus grande facilité à être décorée et de résister aux rayures. Grâce à cette composition, on peut réaliser la partie d'accrochage et la partie support dans une seule matière thermoplastique, ceci afin d'obtenir une homogénéité d'aspect.

Cette matière assure des performances cumulées de chacun des composants, tels que la compatibilité avec le parfum contenant au moins 80% d'éthanol, un faible coefficient de frottement entre deux pièces de même matière, la compatibilité avec un additif anti-UV pour stabiliser le vieillissement lumière des teintes, un module d'élasticité au moins égal à 2000 MPa pour la mémoire de forme, la capacité d'être soudé par ultrasons de manière étanche. La matière de base a une teinte transparente, translucide ou blanche, ce qui facilite la décoration, par exemple par tampographie ou sérigraphie, et qui est de plus métallisable et galvanisable.

Cette composition permet donc d'améliorer les caractéristiques d'une matière dont le coût de fourniture et de mise en oeuvre est beaucoup moins élevé que celui des fluoro-polymères, qui sont actuellement utilisés dans ce but. De plus, on évite la présence de fluor, qui est suspecté de nuisance sur la santé humaine.

La deuxième étape du procédé consiste ensuite à assembler la partie d'accrochage 39 et la partie support 42, de manière à former le récipient 3, de sorte que l'assemblage de la partie d'accrochage 39 et de la partie support 42 forme le réservoir 10 du récipient 3. L'assemblage est de préférence obtenu par soudure à ultrason. Une telle technologie permet notamment d'assembler durablement des matériaux plastiques. En effet, les parties 39, 42 sont maintenues ensemble par l'exercice d'une pression mécanique, tandis que le plastique est chauffé à la jointure entre les deux parties jusqu'au point de fusion grâce aux ultrasons émis par exemple à l'aide d'une sonde à ultrasons. Ainsi, les matériaux fondus des deux parties 39, 42 se mélangent. Après refroidissement, la jointure durcit et les deux parties 39, 42 sont fixées durablement l'une à l'autre.

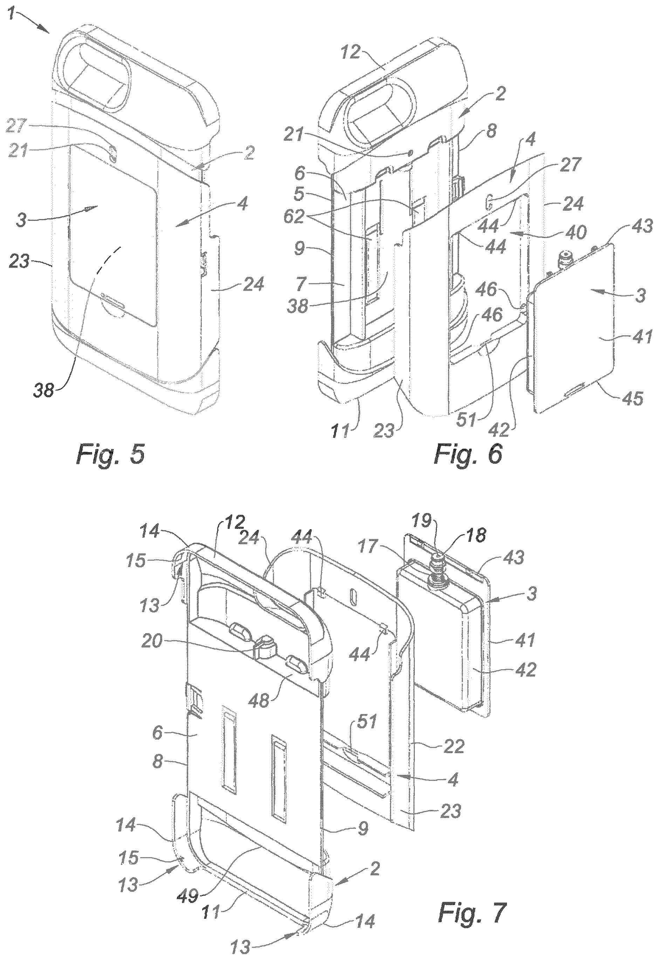

Les figures 5 à 7 montrent un dispositif de protection 1, ici pour un téléphone portable, le dispositif 1 présentant ici un passage pour l'objectif du téléphone. Le dispositif 1 comprend une enveloppe de protection 2 apte à être fixée à l'appareil électronique dans le but de le protéger en cas de choc ou de chute. L'enveloppe de protection 2 comprend ici une coque, de préférence faite d'un matériau rigide pour une protection optimum. La coque est dotée d'une paroi principale 6 formant le fond de l'enveloppe 2, la paroi principale 6 comprenant deux arêtes longitudinales 8, 9 et deux rebords transversaux 11, 12. La paroi 6 a aussi une face interne 5 auprès de laquelle l'appareil électronique est destiné à être positionné, lorsque l'enveloppe 2 est fixée à l'appareil, et une face externe 7 opposée à la face interne 5.

Pour assembler la protection au téléphone portable, l'enveloppe 2 comprend des moyens de fixation 13, qui sont de préférence amovibles, de manière à pouvoir ôter l'enveloppe 2 de l'appareil électronique, par exemple pour changer la batterie de l'appareil. Les rebords 11, 12 comportent les moyens de fixation amovibles, qui sont ici des encoignures 14 formées aux coins des rebords 11, 12. Chaque encoignure 14 est configurée pour retenir un coin de l'appareil électronique. Pour cela, les encoignures 14 ceignent les coins de l'appareil et sont munies de plots 15 qui retiennent l'appareil électronique en le serrant.

Le dispositif 1 comporte en outre un ensemble de distribution d'un produit, notamment un produit cosmétique. L'ensemble de distribution comprend en particulier le récipient 3 muni du réservoir 10 pour le produit et des moyens d'actionnements configurés pour actionner la distribution du produit.

L'ensemble de distribution comprend aussi une buse de pulvérisation 20 du produit, munie d'un trou d'évacuation 21 vers l'extérieur du récipient et du dispositif de protection, le trou 21 étant, de préférence, du côté opposé à celui de l'appareil électronique. La buse 20 est en communication avec l'orifice de sortie 19 du poussoir 18 pour que le produit passant par le poussoir 18 soit guidé dans la buse 20.

L'ensemble de distribution est fixé à l'enveloppe 2 de sorte que le récipient 3 est mobile par rapport à l'enveloppe 2, de préférence selon un degré de liberté correspondant à celui de l'actionnement de la pompe. Autrement dit, le récipient 3 est mobile selon une direction de déplacement, la direction étant de préférence celle selon laquelle le poussoir 18 est mu pour actionner la pompe 17. Cette direction est ainsi dirigée selon le conduit de sortie de la pompe.

A cette fin, le dispositif de protection comprend une structure de maintien 4 du récipient 3 à l'enveloppe 2. La structure 4 est ici montée sur l'enveloppe 2 de manière mobile pour permettre le déplacement du récipient 3. Autrement dit, la structure 4 est solidaire du récipient 3, et ils se déplacent ensemble. Dans le mode de réalisation représenté sur les figures, on agit de préférence sur la structure de maintien 4 pour déplacer le récipient 3 par rapport à l'enveloppe 2.

Sur les figures 5 à 7, la structure de maintien 4 comprend un couvercle 22 mobile agencé sur l'enveloppe de protection 2. Le couvercle 22 recouvre la face externe 7 de la paroi principale 6 de la coque. Le couvercle 22 a ici des côtés longitudinaux recourbés 23, 24, qui s'étendent sur les arêtes longitudinales 8, 9 de la paroi principale 6. Le couvercle 22 comprend également ici une ouverture 27 pour permettre le passage du produit sortant de la buse 20, car dans le mode de réalisation représenté, le couvercle 22 recouvre la buse 20 de l'enveloppe 2. Selon d'autres modes de réalisation dans lesquels le couvercle 22 ne recouvre pas la buse 20, une telle ouverture n'est pas nécessaire.

Les côtés recourbés 23, 24 sont munis de rainures agencées pour recevoir les arêtes longitudinales 8, 9 de la face principale 6. De la sorte, les arêtes longitudinales 8, 9 peuvent glisser dans les rainures afin de permettre le déplacement du couvercle 22 le long de la paroi principale 6, tout en restant solidaires dans les autres directions. Le couvercle 22 est lié à la paroi principale 6 de la coque grâce aux rainures mais peut se déplacer par rapport à la coque.

Le dispositif 1 est en outre configuré pour que le déplacement du récipient 3 par rapport à l'enveloppe 2 actionne la distribution du produit. Pour cela, les moyens d'actionnement sont fixes par rapport à l'enveloppe de protection lors de l'actionnement de la distribution, tandis que le récipient 3 suit la direction de déplacement de la structure de maintien 4. Ainsi, la structure de maintien 4 et le réservoir du récipient 3 se déplacent ensemble par rapport à l'enveloppe 2 en direction du poussoir 18, ce dernier restant immobile. Pour cela, le poussoir est maintenu par la coque de l'enveloppe 2, en particulier pour éviter qu'il puisse se déplacer dans la même direction que le récipient 3. Par conséquent, le poussoir 18 appuie sur le conduit de sortie 17, de sorte que la pompe est actionnée, ce qui provoque la distribution d'au moins une partie du produit contenu dans le réservoir.

En outre, le récipient 3 est assemblé à la structure de maintien 4, ici de manière amovible. Pour cela, le dispositif 1 comprend ici un espace d'emboîtement 38 du récipient 3, comme cela est représenté sur la figure 6. L'espace d'emboîtement 38 est défini entre la face externe 7 de la paroi principale 6 de l'enveloppe de protection 2 et le couvercle 22 de la structure de maintien 4, qui est disposé par exemple à une distance correspondant sensiblement à l'épaisseur du récipient, afin que ce dernier soit entièrement emboîté dans l'espace 38.

Le couvercle 22 de la structure de maintien 4 est de plus ouvert en son centre pour permettre l'insertion du récipient 3 dans l'espace 38. Cette ouverture 40 a ici des dimensions au moins égales à celles du récipient 3, pour faciliter son insertion.

Le premier bord 43 de la paroi 41 est destiné à reposer sur des premiers ergots 44 du couvercle 22 s'étendant dans l'ouverture 40. Un deuxième bord 45 opposé au premier est destiné à reposer sur des deuxièmes ergots 46 du couvercle 22, qui s'étendent également dans l'ouverture 40.

Le dispositif comprend un système d'encliquetage agencé en partie au niveau du deuxième bord de la paroi, le deuxième bord étant opposé au premier. Le système d'encliquetage est doté d'une part du cran d'encliquetage 50 agencé sur le deuxième bord 45 de la paroi support 41, et d'une fente de réception 51 du cran 50 agencée sur le couvercle 22 au niveau de l'ouverture 40. Lorsque le cran d'encliquetage 50 est introduit dans la fente 51, il est bloqué. Le cran 50 est notamment doté d'un bord épaissi à son extrémité libre. Le bord épaissi est retenu par la fente lorsque le cran 50 est inséré dans la fente. De plus, la paroi 41 comporte une lumière traversante permettant la déformation du deuxième bord 45 au niveau du cran d'encliquetage 50, de sorte que le cran est déplaçable pour pouvoir le retirer de la fente de réception 51, et ainsi pouvoir retirer et séparer le récipient 3 du reste du dispositif de protection, notamment de !a structure de maintien 4.

La face externe 7 de la paroi principale 6 est ici pourvue d'au moins une lame ressort 62, ici deux comme le montre la figure 6, pour faciliter le retrait du récipient hors de l'espace d'emboîtement 38. Ainsi, lorsque le récipient 3 est emboîté, il repousse les lames 62, et reste dans la position grâce aux moyens d'accrochage 52 du récipient 3, qui s'opposent à la force exercée par les lames ressort.

Dans ce mode de réalisation, l'ensemble de distribution est séparé en deux, une première partie est disposée sur l'enveloppe de protection 2 et une deuxième partie sur la structure de maintien 4. D'une part, la buse 20 et le trou d'évacuation 21 sont intégrés à l'enveloppe de protection 2, et d'autre part le récipient 4 est muni de la pompe 17 et du poussoir 18. Ainsi, lorsque le récipient 4 est retiré de l'espace d'emboîtement, la buse 20 et le trou d'évacuation 21 sont séparés du reste de l'ensemble de distribution.

L'enveloppe 2 comprend de plus un puits de réception 47 du poussoir 18. Ainsi, lorsque le récipient 3 est emboîté, le poussoir 18 est introduit dans le puits 47. Le puits de réception 47 est agencé sous la buse 20 de manière à ce que le produit provenant de l'orifice de distribution 19 du poussoir 18 passe ensuite dans la buse 20. Les bords 11,12 de l'enveloppe de protection 2 présentent chacun une paroi en porte à faux 48, 49 par rapport à la paroi principale 6, orientée vers la face externe 7. Les parois en porte-à-faux 48, 49 délimitent longitudinalement l'espace d'emboîtement 38, et sont perpendiculaires aux bords courbés du couvercle 22. Le puits 47 et la buse 20 sont formés sur l'une des parois en porte à faux, à l'extérieur de l'espace d'emboîtement 38, le puits 47 étant ouvert par cette paroi en porte à faux 48, vers l'espace d'emboîtement 38.

## Revendications

1. Récipient (3), notamment pour un dispositif de protection (1) pour appareil électronique, le récipient (3) étant muni d'un réservoir (10) pour produit, notamment cosmétique, le récipient (3) comprenant deux parties, une première partie d'accrochage (39) munie de moyens d'accrochage (52) du récipient à un objet distinct du récipient, notamment un élément du dispositif de protection, et une deuxième partie support (42), **caractérisé en ce que** la deuxième partie support (42) définit au moins en partie le volume dudit réservoir (10), la partie d'accrochage (39) et la partie support (42) étant configurées pour pouvoir être assemblées l'une à l'autre de manière à former ledit réservoir (10).

2. Récipient selon la revendication 1, dans lequel les moyens d'accrochage (52) sont configurés pour que le récipient (3) soit amovible.

3. Récipient selon la revendication 1 ou 2, dans lequel au moins la partie d'accrochage (39) est formée par injection.

4. Récipient selon la revendication 3, dans lequel au moins la partie d'accrochage (39) est faite d'un matériau thermoplastique.

5. Récipient selon l'une quelconque des revendications précédentes, dans lequel la partie d'accrochage (39) et la partie support (42) sont assemblées par soudure à ultrason.

6. Récipient selon l'une quelconque des revendications précédentes, dans lequel la partie d'accrochage (39) comprend une paroi (41) sensiblement plane.

7. Récipient selon la revendication 6, dans lequel la partie support (42) comprend une ouverture de sorte que le volume défini par la partie support (42) est ouvert.

8. Récipient selon la revendication 7, dans lequel la paroi (41) de la partie d'accrochage (39) obture l'ouverture de la partie support (42), lorsque les deux parties (39, 42) sont assemblées,

9. Récipient selon l'une quelconque des revendications 6 à 8, dans lequel les moyens d'accrochage (52) comportent des pattes (54) agencées sur un bord (43) de la paroi (41) de la partie d'accrochage (39).

10. Récipient selon l'une quelconque des revendications 6 à 9, dans lequel les moyens d'accrochage (52) comportent un système d'encliquetage agencé en partie sur un bord (45) de la paroi (41).

11. Dispositif de protection pour appareil électronique, notamment pour un téléphone portable, comprenant un récipient (3) selon l'une quelconque des revendications précédentes.

12. Procédé de fabrication d'un récipient (3) selon l'une quelconque des revendications 1 à 10, le procédé comprenant les étapes consécutives consistant à :
- former séparément, une partie d'accrochage (39) munie de moyens d'accrochage (52), et une partie support (42) définissant au moins en partie le volume dudit réservoir (10),
- assembler la partie d'accrochage (39) et la partie support (42), de manière à réaliser le récipient (3), l'assemblage de la partie d'accrochage (39) et de la partie support (42) formant le réservoir (10) du récipient (3).

13. Procédé selon la revendication 12, dans lequel l'assemblage entre la partie d'accrochage (39) et la partie support (42) est opéré par soudure à ultrasons.

## Patentansprüche

1. Behälter (3), insbesondere für eine Vorrichtung zum Schutz (1) einer elektronischen Einrichtung, wobei der Behälter (3) mit einem Reservoir (10) für ein insbesondere kosmetisches Produkt versehen ist, wobei der Behälter (3) zwei Teile umfasst, ein erstes Einhängeteil (39), das mit Mitteln zum Einhängen (52) des Behälters in einen vom Behälter unterschiedlichen Gegenstand, insbesondere ein Element der Schutzvorrichtung, versehen ist, und ein zweites Trägerteil (42), **dadurch gekennzeichnet, dass** der zweite Trägerteil (42) mindestens zum Teil das Volumens des Reservoirs (10) definiert, wobei das Einhängeteil (39) und das Trägerteil (42) konfiguriert sind, um so miteinander zusammengesetzt werden zu können, um das Reservoir (10) zu bilden.

2. Behälter nach Anspruch 1, wobei die Einhängemittel (52) konfiguriert sind, dass der Behälter (3) abnehmbar ist.

3. Behälter nach Anspruch 1 oder 2, wobei mindestens das Einhängeteil (39) durch Spritzguss gebildet wird.

4. Behälter nach Anspruch 3, wobei mindestens das Einhängeteil (39) aus einem thermoplastischen Material gefertigt ist.

5. Behälter nach einem der vorstehenden Ansprüche, wobei das Einhängeteil (39) und das Trägerteil (42) durch Ultraschallschweißen zusammengesetzt sind.

6. Behälter nach einem der vorstehenden Ansprüche, wobei das Einhängeteil (39) eine im Wesentlichen ebene Wand (41) umfasst.

7. Behälter nach Anspruch 6, wobei das Trägerteil (42) eine Öffnung umfasst, sodass das vom Trägerteil (42) definierte Volumen offen ist.

8. Behälter nach Anspruch 7, wobei die Wand (41) des Einhängeteils (39) die Öffnung des Trägerteils (42) verschließt, wenn die zwei Teile (39, 42) zusammengesetzt sind.

9. Behälter nach einem der Ansprüche 6 bis 8, wobei die Einhängemittel (52) Klauen (54) beinhalten, die an einer Kante (43) der Wand (41) des Einhängeteils (39) angeordnet sind.

10. Behälter nach einem der Ansprüche 6 bis 9, wobei die Einhängemittel (52) ein Klicksystem beinhalten, das zum Teil an einer Kante (45) der Wand (41) eingerichtet ist.

11. Vorrichtung zum Schutz für einer elektronischen Einrichtung, insbesondere für ein Mobiltelefon, die einen Behälter (3) nach einem der vorstehenden Ansprüche umfasst.

12. Verfahren zur Herstellung eines Behälters (3) nach einem der Ansprüche 1 bis 10, wobei das Verfahren die aufeinanderfolgenden Schritte umfasst, die darin bestehen:
- ein Einhängeteil (39), das mit Mitteln zum Einhängen (52) versehen ist, und ein Trägerteil (42), das mindestens zum Teil das Volumen des Reservoirs (10) definiert, getrennt zu bilden,
- das Einhängeteil (39) und das Trägerteil (42) zusammenzusetzen, um den Behälter (3) zu realisieren, wobei das Zusammensetzen des Einhängeteils (39) und des Trägerteils (42) das Reservoir (10) des Behälters (3) bildet.

13. Verfahren nach Anspruch 12, wobei das Zusammensetzen zwischen dem Einhängeteil (39) und dem Trägerteil (42) mittels Ultraschallschweißen erfolgt.

## Claims

1. Container (3), in particular for a protective device (1) for an electronic appliance, the container (3) being provided with a reservoir (10) for a product, in particular cosmetic, the container (3) comprising two parts, a first coupling part (39) provided with means for coupling (52) the container to an object separate from the container, in particular to an element of the protective device, and a second holding part (42), **characterised in that** the second holding part (42) defines at least partially the volume of said reservoir (10), the coupling part (39) and the holding part (42) being configured to be able to be assembled to one another so as to form said reservoir (10).

2. Container according to claim 1, wherein the coupling means (52) are configured such that the container (3) is removable.

3. Container according to claim 1 or 2, wherein at least the coupling part (39) is formed by injection.

4. Container according to claim 3, wherein at least the coupling part (39) is made of a thermoplastic material.

5. Container according to any one of the preceding claims, wherein the coupling part (39) and the holding part (42) are assembled by ultrasonic welding.

6. Container according to any one of the preceding claims, wherein the coupling part (39) comprises a substantially flat wall (41).

7. Container according to claim 6, wherein the holding part (42) comprises an opening such that the volume defined by the holding part (42) is open.

8. Container according to claim 7, wherein the wall (41) of the coupling part (39) closes the opening of the holding part (42), when the two parts (39, 42) are assembled.

9. Container according to any one of claims 6 to 8, wherein the coupling means (52) include pads (54) arranged on an edge (43) of the wall (41) of the coupling part (39).

10. Container according to any one of claims 6 to 9, wherein the coupling means (52) include a snap-fitting system arranged partially on an edge (45) of the wall (41).

11. Protective device for an electronic appliance, in particular for a mobile phone, comprising a container (3) according to any one of the preceding claims.

12. Method for manufacturing a container (3) according to any one of claims 1 to 10, the method comprising consecutive steps consisting of:
- forming separately, a coupling part (39) provided with coupling means (52), and a holding part (42) defining at least partially the volume of said reservoir (10),
- assembling the coupling part (39) and the holding part (42), so as to produce the container (3), the assembly of the coupling part (39) and of the holding part (42) forming the reservoir (10) of the container (3).

13. Method according to claim 12, wherein the assembly of the coupling part (39) and of the holding part (42) is performed by ultrasonic welding.
